# EUROPÄISCHE PATENTSCHRIFT

(11) **EP 2 052 845 B1**
(45) Veröffentlichungstag und Bekanntmachung des Hinweises auf die Patenterteilung: **15.06.2011**
(21) Anmeldenummer: 09001791.4
(22) Anmeldetag: 09.08.2005
(51) Int. Cl.: B29C 67/00, B22F 3/105, G03F 7/00

(54) **Vorrichtung zur Herstellung von Formkörpern**
Device for manufacturing parts
Dispositif de fabrication des corps

(30) Priorität: 27.08.2004 DE 102004041633
(43) Veröffentlichungstag der Anmeldung: 29.04.2009
(62) Teilanmeldung aus: 05771869.4
(73) Patentinhaber: Realizer GmbH, 33178 Borchen (DE); SLM Solutions GmbH, 23556 Lübeck (DE)
(72) Erfinder: Fockele, Matthias Dr., 33179 Borchen (DE)
(74) Vertreter: Tiesmeyer, Johannes

(56) Entgegenhaltungen:
- EP-A- 1 234 625
- EP-A- 1 514 622
- EP-B1- 0 946 325
- WO-A-2004/014636
- DE-A1- 19 905 067
- DE-U1- 20 107 262
- DE-U1- 20 318 721
- US-A1- 2001 045 678
- US-A1- 2004 084 814
- US-B1- 6 375 874

## Beschreibung

Die Erfindung betrifft eine Vorrichtung zur Herstellung von Formkörpern durch schichtweises Aufbauen aus pulverförmigem, insbesondere metallischem oder keramischem Werkstoff, mit einem Prozessraumgehäuse, einer Schutzgaszuleitungs- und -ableitungseinrichtung zur Erzeugung und Aufrechterhaltung einer Schutzgasatmosphäre in dem Prozessraum, einem Träger für den Schichtaufbau, einer Bestrahlungseinrichtung zur Bestrahlung der jeweils auf dem Träger präparierten Werkstoffpulverschicht in einem dieser Schicht zugeordneten Querschnittsbereich des Modells des Formkörpers mit einer Strahlung, insbesondere fokussierten Laserstrahlung, die das Werkstoffpulver in diesem Querschnittsbereich durch Erhitzen zum Verschmelzen oder ggf. zum Versintern bringt, und einer Pulverschicht-Präparierungseinrichtung zur Präparierung der jeweils folgenden Werkstoffpulverschicht auf der zuletzt bestrahlten oder aufgetragenen Schicht.

Die Erfindung bezieht sich insbesondere auf das Gebiet des selektiven Laserschmelzens und geht sowohl verfahrensmäßig als auch vorrichtungsmäßig von einer Technologie aus, wie sie z. B. in der DE 199 05 067 A1, in der DE 101 12 591 A1, in der WO 98/24574 oder in der dazu korrespondierenden DE 196 49 865.1 beschrieben ist, wenngleich die Erfindung auch auf das Gebiet des Lasersinterns anwendbar ist.

Bei der hier betrachteten Technologie geht es um eine Vorrichtung zur Herstellung eines Formkörpers, z. B. eines Prototyps eines Produkts oder Bauteils, eines Werkzeugs oder eines Ersatzteils, einer Prothese, insbesondere Zahnprothese, orthopädische Prothese usw., entsprechend dreidimensionalen CAD-Daten eines Modells des Formkörpers durch schichtweises Aufbauen aus pulverförmigem metallischem oder keramischem Werkstoff, bei dem nacheinander mehrere Pulverschichten übereinander aufgebracht werden, wobei jede Pulverschicht vor dem Aufbringen der nächstfolgenden Pulverschicht mit einem normalerweise fokussierten Laserstrahl in einem vorgegebenen Bereich, der einem ausgewählten Querschnittsbereich des Modells des Formkörpers entspricht, erhitzt wird, und bei dem der Laserstrahl jeweils entsprechend den CAD-Querschnittsdaten des ausgewählten Querschnittsbereichs des Modells oder daraus abgeleiteten Daten über die jeweilige Pulverschicht geführt wird. Das Werkstoffpulver wird beim selektiven Laserschmelzen als bindemittel- und flussmittelfreies, metallisches, keramisches oder gemischt metallisch/keramisches Werkstoffpulver aufgebracht und durch den Laserstrahl auf Schmelztemperatur erhitzt, wobei die Energie des Laserstrahls so ausgewählt wird, dass das Werkstoffpulver an der Auftreffstelle des Laserstrahls über seine gesamte Schichtdicke möglichst vollständig aufgeschmolzen wird. Über der Zone der Wechselwirkung zwischen dem Laserstrahl und dem metallischen Werkstoffpulver wird eine Schutzgasatmosphäre, z. B. Argon-Atmosphäre, aufrechterhalten.

Die hier betrachteten Vorrichtungen werden auch als Rapid-Prototyping-Vorrichtungen oder Vorrichtungen zum selektiven Laserschmelzen bezeichnet.

Aufgabe der Erfindung ist es, den Betrieb einer solchen Vorrichtung zu vereinfachen und kontinuierlicher zu gestalten und insbesondere den Anwendungsbereich einer solchen Vorrichtung mit einfachen Mitteln zu vergrößern und flexibler zu machen.

Diese Aufgabe wird gelöst durch eine Vorrichtung mit den Merkmalen von Anspruch 1.

Erfindungsgemäß ist die Schutzgaszuleitungs- und -ableitungseinrichtung für den Prozessraum mit einem an einem Schutzgasabsauganschluss einer Pumpe angeschlossenen und in den Prozessraum hineinragenden Saugrüssel zum Absaugen von Schutzgas und/oder von Pulver aus dem Prozessraum ausgestattet, wobei z. B. in einer Verbindungsleitung zwischen dem Saugrüssel und der Pumpe eine Pulver aus dem abgesaugten Medium abscheidende Filtereinrichtung vorgesehen sein kann.

Durch den Saugrüssel ist es möglich, Pulver aus dem Prozessraum abzusaugen und zurückzugewinnen, ohne es mit Außenluft in Kontakt zu bringen. Das Pulver kann in einem an die Schutzgasatmosphäre angeschlossenen Behälter gesammelt werden und bedarfsweise für einen neuen Bauprozess eines Formkörpers wiederverwendet werden. Im Falle der Verwendung verschiedener Pulver kann es vorgesehen sein, dass die Pulver separat abgesaugt werden können, so dass eine Durchmischung verschiedener Pulver verhindert wird. Der Saugrüssel kann flexibel sein und mittels einer Handhabungsvorrichtung in dem Prozessraum manipuliert werden, um die Saugrüsselöffnung nahe an das abzusaugende Pulver heranzuführen. Insbesondere kann ein solcher Saugrüssel auch zum Absaugen von Prozessrauch und Schutzgas während des Bauprozesses genutzt werden.

Bevorzugte Weiterbildungen der Erfindung sind in den abhängigen Ansprüchen angegeben. Insbesondere sei darauf hingewiesen, dass die Pulverrückgewinnungseinrichtung, wie auch der Prozessraum in einen Schutzgaskreislauf integriert sein können, welcher Filterelemente und Pulverabscheider enthält, so dass aus der Pulverrückgewinnungseinrichtung bzw. aus dem Prozessraum abgesaugtes Schutzgas nach Filterung wieder in die Pulverrückgewinnungseinrichtung bzw. den Prozessraum eingebracht wird.

Der oben schon angesprochene Saugrüssel kann mit Werkzeugen, insbesondere Reinigungswerkzeugen kombiniert sein, etwa mit einem Pulverbürstenelement in der Nähe der Saugöffnung. Ferner kann an der Saugöffnung ein Vorsieb angeordnet sein.

Weiter wird vorgeschlagen, bei einer erfindungsgemäßen Vorrichtung in dem Prozessraumgehäuse mehrere, gesondert voneinander angeordnete Träger für den Schichtenaufbau mehrerer Formkörper vorzusehen und die Pulverschichtpräparierungseinrichtung mit den einzelnen Trägem zugeordneten Pulverreservoirs zur Bereitstellung von Pulver für den jeweiligen Bauprozess auszustatten. Es ist dabei sichergestellt, dass sich die verwendeten Pulver nicht vermischen.

Diese Ansführungsform erlaubt somit die Herstellung mehrerer Formkörper nebeneinander in einem Prozessraumgehäuse und insbesondere unter einer gemeinsamen Schutzgasatmosphäre. Die auf den einzelnen Trägem herzustellenden Formkörper können gleich oder unterschiedlich sein. Insbesondere können die Formkörper aus verschiedenen Pulvermaterialien hergestellt werden, da jedem einzelnen Träger ein eigenes Pulverreservoir der Pulverschichtpräparierungseinrichtung zugeordnet ist.

Die Pulverschichtpräparierungseinrichtung weist gemäß einer Ausführungsform eine die Pulverreservoirs umfassende Pulverabgabevorrichtung auf, die einen über die Träger hinweg mittels einer Antriebseinrichtung geführt hin- und herbewegbaren und die Pulverreservoirs mitführenden Halter umfasst.

Die Schichtenglättungsesinrichtung weist vorzugsweise Pulverabstreifelemente in Zuordnung zu den einzelnen Trägern auf, wobei die Pulverabstreifelemente zusammen mit der Pulverabgabevorrichtung an einem von der Antriebseinrichtung angetriebenen gemeinsamen Halter bewegbar sind.

Die Pulverreservoirs sind vorzugsweise Wechselbehälter, die in Einsatzöffnungen des bewegbaren Halters auswechselbar aufgenommen sind.

Jedes Pulverreservoir kann einen Pulverstandssensor aufweisen.

Die Pulverreservoirs sind gemäß einer Ausführungsform in einer vorbestimmten Parkstellung des bewegbaren Halters innerhalb des Prozessraumgehäuses automatisch mit Pulver aus den jeweiligen Pulverreservoirs zugeordneten externen Pulverquellen befüllbar.

Jeder der Träger ist vorzugsweise in einem jeweiligen Bauzylinder an und unterhalb der Bodenplatte des Prozessraumgehäuses aufgenommen - und gesteuert vertikal verstellbar.

Die Träger sind vorzugsweise mittels einer steuerbaren Elevatoreinrichtung, welche einen allen Trägem gemeinsamen Verstellantrieb aufweist, gemeinsam vertikal verstellbar.

Für mehrere, insbesondere alle Träger kann eine gemeinsame Bestrahlungseinrichtung vorgesehen sein, die in bevorzugter Weise eine über die Träger hinweg verfahrbare und in jeweilige Betriebspositionen zur gesteuerten Pulverschichtenbestrahlung einstellbare Strahlablenkeinrichtung, insbesondere X-Y-Scannereinrichtung aufweist.

Gemäß einer weiteren Ausführungsform ist jedem Träger eine eigene Bestrahlungseinrichtung zur gesteuerten Pulverschichtenbestrahlung zugeordnet.

Es sei darauf hingewiesen, dass die einzelnen Erfindungsaspekte im Wesentlichen beliebig miteinander kombiniert werden können.

Ausführungsbeispiele der Erfindung werden im Folgenden unter Bezugnahme auf die Figuren näher erläutert.
- Fig. 1: zeigt in einer perspektivischen Darstellung ein erstes Ausfüh- rungsbeispiel der Erfindung.
- Fig. 2: zeigt unter Weglassung von Außengehäusewänden den Boden- bereich der Prozesskammer des Ausführungsbeispiels nach Fig. 1 aus einer Perspektive, wie sie in Fig. 1 mit dem Pfeil II ange- deutet ist.
- Fig. 3: zeigt das Ausführungsbeispiel aus Fig. 1 in einer perspektivi- schen Ansicht von unten.
- Fig. 4: zeigt ein zweites Ausführungsbeispiel nach der Erfindung in teils schematischer Darstellung.

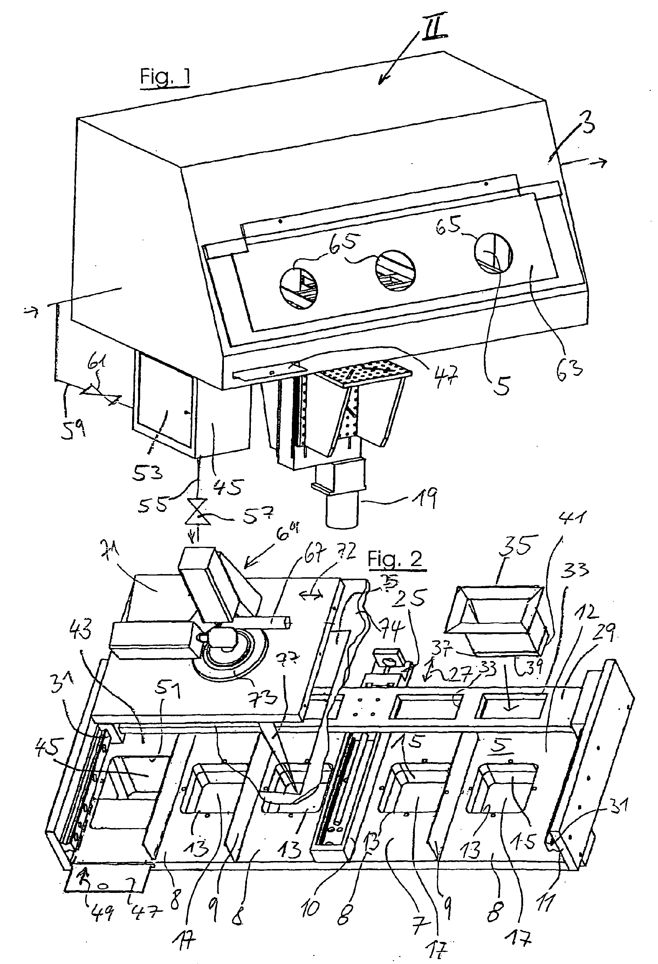

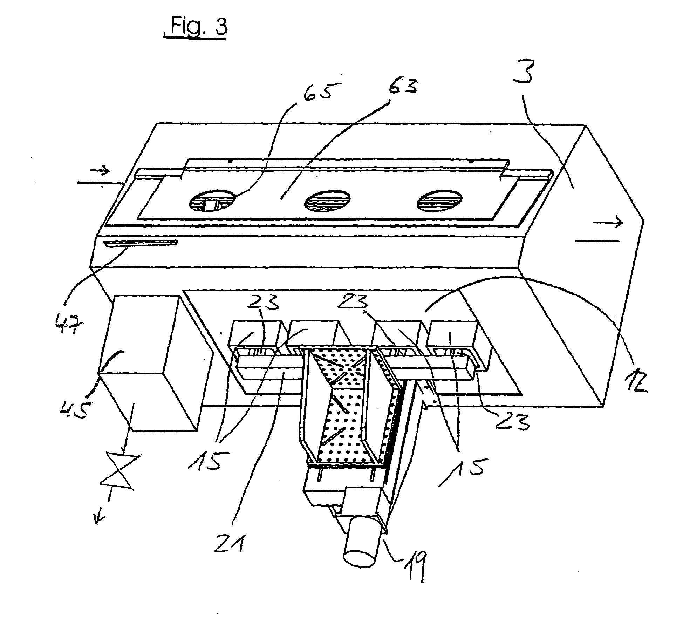

In Fig. 1 ist im Wesentlichen das Außengehäuse 3 einer Vorrichtung zur Herstellung von Formkörpern erkennbar. Das Außengehäuse 3 umgibt einen Prozessraum 5, dessen Bodenbereich 7 in Fig. 2 erkennbar ist. Der Bodenbereich 7 ist in vier Prozessraumabteile 8 durch vertikale Trennwände 9 bzw. 10 bzw. 11 unterteilt. In jedem Prozessraumabteil 8 ist die Bodenplatte 12 mit einer nach unten durchgehenden Öffnung 13 versehen, an der sich jeweils ein Bauzylinder 15 an der Unterseite der Bodenplatte 12 fluchtend anschließt. Die Bauzylinder 15 enthalten einen jeweiligen kolbenartigen Träger 17 für den Schichtaufbau der jeweiligen herzustellenden Formkörper. Die Träger 17 sind im Beispielsfall 2 mittels einer gemeinsamen Vertikalantriebseinheit 19 simultan in den Bauzylindern 15 vertikal verlagerbar. In Fig. 3 ist eine Querstange 21 erkennbar, welche von der Linearantriebseinheit 19 gesteuert vertikal bewegt werden kann. Vermittels der an dieser Querstange 21 fixierten und von unten her axial in die Bauzylinder 15 hineinragenden Trägerstangen 23 sind die Träger 17 mit der Querstange 21 verbunden. Die Träger 17 sind abdichtend in den Bauzylindern 15 geführt, so dass aus den Bauzylindern 15 kein Schutzgas während des Bauprozesses aus dem Prozessraum 5 entweichen kann.

In Fig. 2 sind Elemente einer Pulverschicht-Präparierungseinrichtung mit zugehöriger Pulverabgabevorrichtung erkennbar, nämlich ein mittels der Spindeltriebvorrichtung 25 in Richtung des Pfeiles 27 über die Träger 17 hinweg hin- und herbewegbarer Pulverreservoirhalter 29 und Linearführungen 31 für den Halter 29. Der Halter 29 weist Einstecköffnungen 33 für Wechselbehälter 35 auf, welche als Pulverreservoirs dienen. Im Beispielsfall ist nur ein Wechselbehälter 35 stellvertretend für üblicherweise vier Wechselbehälter dargestellt, die normalerweise in den Einstecköffnungen 33 wahlweise auswechselbar aufgenommen sind. Die Wechselbehälter 35 sind so dimensioniert, dass sie jeweils ein Vorratsvolumen an Pulver aufnehmen können, welches für die Präparation einer Vielzahl von Pulverschichten vorbestimmter Dicke ausreicht. Nicht zeichnerisch dargestellt ist eine Pulvernachfülleinrichtung, welche dazu dient, die Wechselbehälter 35 in einer vorbestimmten Parkstellung des bewegbaren Halters 29 innerhalb des Prozessraumgehäuses automatisch mit Pulver aus externen Pulverquellen zu beschicken, falls dies während des Bauprozesses erforderlich sein sollte.

Die Wechselbehälter 35 weisen an ihren unteren Enden Pulverabstreifelemente 37 auf, die sich quer zur Bewegungsrichtung des Halters 29 erstrecken. Die Pulverabstreifelemente 37 können z. B. Bereiche eines die untere Ausgabeöffnung 39 der Wechselbehälter 35 umlaufend begrenzenden Randes 41 des Wechselbehälters 35 sein und z. B. aus einem Kunststoff, etwa Silikon, bestehen. Während des Schichtenpräparationsbetriebes liegt der untere Rand 41 des Wechselbehälters 35 auf der Bodenplatte 12 auf, so dass die Pulverabstreifelemente 37 eine jeweilige Pulverschicht auf einem betreffenden Träger 17 im zugehörigen Bauzylinder auf Höhe der Oberseite der Bodenplatte 12 nivellieren kann.

In anderen Ausführungsformen können die Pulverabstreifelemente gesondert von den Wechselbehältern vorgesehen sein.

Der Halter 29 befindet sich oberhalb der Trennwände 9 zwischen Prozessraumabteilen 8. Die Trennwände 9 dienen dazu, zu verhindern, dass Pulver von einem Prozessraumabteil 8 in ein anderes Prozessraumabteil 8 gelangt. Die Prozessraumabteile 8 sind im Übrigen jedoch nicht hermetisch gegeneinander separiert, so dass eine gemeinsame Schutzgasatmosphäre für die Prozessraumabteile 8 aufgebaut bzw. aufrechterhalten werden kann.

Gemäß Fig. 2 ist in dem Prozessraum außer den vier Prozessraumabteilen noch ein Schleusenabteil 43 zu erkennen. Das Schleusenabteil 43 mit der Schleusenkammer 45 kann genutzt werden, um von außen auf den Prozessraum 5 zuzugreifen, ohne die Schutzgasatmosphäre im Prozessraum mit Außenluft zu vermischen. So ist es z. B. möglich, einen fertig gestellten Formkörper von einem Träger 17 mittels noch zu erläuternder Hilfsmittel zu entfernen und in die Schleusenkammer 45 zu legen, wobei vorher dafür Sorge getragen worden ist, dass auch in der Schleusenkammer 45 Schutzgasatmosphäre herrscht. Nach dem Einlegen des Formkörpers in die Schleusenkammer 45 kann diese prozessraumseitig geschlossen werden, indem die Schieberblende 47 in Richtung des Pfeiles 49 in die die Öffnung 51 verschließende Schließstellung verschoben wird. Danach kann ggf. der Bauprozess weiterer Formkörper im Prozessraum 5 fortgesetzt werden.

Die Schleusenkammer 45 weist auch eine Außentür 53 (vgl. Fig. 1) auf. Nach Öffnen dieser Außentür 53 kann ein in der Schleusenkammer 45 befindlicher Gegenstand nach außen entnommen werden.

Die dabei in die Schleusenkammer 45 eindringende Außenluft ist nach Wiederverschließen der Außentür 53 durch Spülen der Kammer 45 mit Schutzgas wieder zu entfernen. Hierzu weist die Schleusenkammer 45 eine Entlüftungsleitung 55 mit Ventil 57 und eine Schutzgaszuführungsleitung 59 mit Ventil 61 auf. Zum Spülen der Schleusenkammer 45 wird bei geschlossenen Türen 47, 53 Schutzgas mittels der Schutzgasleitung 59 in die Schleusenkammer 45 eingelassen, wobei das Ventil 57 der Entlüftungsleitung 55 über eine hinreichend lange Zeit geöffnet bleibt, so dass Luft aus der Schleusenkammer 45 von dem nachströmenden Schutzgas nach außen hin verdrängt werden kann. Zum Abschließen des Spülvorgangs wird dann das Ventil 57 wieder geschlossen, und es kann die Schleusentür 47 zum Prozessraum 5 hin bei Bedarf wieder geöffnet werden. Es hätte im Übrigen unter Verwendung der Schleusenkammer 45 auch ein Gegenstand von außen in den Prozessraum 5 eingebracht werden können, wobei dieser Gegenstand während der Schleusenkammerspülung in der Schleusenkammer 45 aufzubewahren gewesen wäre und schließlich nach Beendigung des Spülvorgangs und Öffnen der Tür 47 dann in den Prozessraum 5 hätte übernommen werden können: Hierbei hätte es sich z. B. um einen Wechselbehälter 35 mit nach außen versiegeltem Pulvervorrat handeln können, wobei die Versiegelung des Behälters 35 dann unter Schutzgasatmosphäre im Prozessraum 5 hätte aufgehoben werden können. Dem Aspekt der Verwendung von Wechselbehältern, die unter Schutzgasatmosphäre oder im Vakuum mit Pulver gefüllt und nach außen versiegelt worden sind, bei der Herstellung von Formkörpern nach dem Verfahren des selektiven Lasersintems oder Laserschmelzens kann eigenständige erfinderische Bedeutung zukommen.

Wie die vorstehenden Erläuterungen erkennen lassen, kann die Schleusenkammer 45 dazu genutzt werden, das Werkstoffpulver so zu handhaben, dass es nicht mit Luft bzw. der Außenatmosphäre in Kontakt kommt. Unter einem nachstehend noch in Bezug auf das zweite Ausführungsbeispiel näher erläuterten Gesichtspunkt der Erfindung kann als weitere Maßnahme bei dem Ausführungsbeispiel nach den Fig. 1-3 vorgesehen sein, dass auch die Pulverentfernung aus dem Prozessraum so erfolgt, dass das Pulver nicht mit Luft in Kontakt kommt. Die Pulverentfernung erfolgt dabei durch Absaugen, vorzugsweise unter Verwendung von Ableitungen, welche Schutzgas enthalten. Die Abscheidung des Pulvers aus einem Schutzgaskreislauf erfolgt mittels einer Pulverfalle bzw. eines entsprechenden Filters, wobei das Pulver dann unter Luftausschluss in einem Behälter zur Wiederverwendung gesammelt wird.

Wie in den Fig. 1 und 3 erkennbar, weist das Prozessraumgehäuse 3 z. B. in einer bedarfsweise zu öffnenden Frontklappe 63 Handschuhzugriffsöffnungen 65 auf. An jeder dieser Handschuhzugriffsöffnungen 65 ist ein in den Prozessraum hineinzustülpender Handschuh (nicht gezeigt) vorgesehen, welcher die Öffnung 65 nach außen hin gasdicht abschließt. Eine Bedienungsperson kann somit durch eine Öffnung 65 hindurch in einen Handschuh eingreifen und somit in dem Prozessraum 5 und ggf. in der Schleusenkammer 45 von außen her unter Aufrechterhaltung der Schutzgasatmosphäre Gegenstände manipulieren, also etwa einen fertig gestellten Formkörper von einem Träger 17 in die Schleusenkammer 45 einlegen oder Reinigungsarbeiten oder Umrüstarbeiten vornehmen.

Bei dem Ausführungsbeispiel nach den Fig. 1-3 ist für den Betrieb jedes der Prozessraumabteile 8 eine gemeinsame Bestrahlungseinrichtung vorgesehen. Hierzu gehört ein Laser (nicht gezeigt), welcher über eine Lichtleitfaser bzw. über ein Lichtleitfaserbündel 67 Laserstrahlung für eine Strahlablenkeinrichtung 69 bereitstellt. Als Strahlablenkeinrichtung 69 ist im Beispielsfall eine X-Y-Scannereinrichtung an einem gesteuert und geführt in Richtung des Pfeils 72 verfahrbaren Rahmen 71 vorgesehen ist. Mit 73 ist in Fig. 2 eine an dem Rahmen vorgesehene f-Theta-Linse bezeichnet, mittels welcher der von der Scannereinrichtung 69 abgelenkte Laserstrahl auf die jeweils zuletzt präparierte Pulverschicht auf einem betreffenden Träger 17 fokussiert wird..

Anstelle einer solchen Scanneranordnung könnte als Ablenkeinrichtung z. B. auch eine steuerbare Mikrospiegelanordnung oder ggf. eine steuerbare selbstleuchtende Lichtquellenmatrix, etwa eine integrierte Lasermatrix, vorgesehen sein.

Anstelle eines Lasers als Strahlungsquelle oder zusätzlich könnte im Rahmen der Erfindung auch eine andere Strahlungsquelle eingesetzt werden, etwa eine Elektronenstrahlungsquelle oder Ionenstrahlungsquelle.

Die Linearführungsmittel für die Antriebseinrichtung des optischen Rahmens 71 sind in den Figuren nicht dargestellt. Es sei aber darauf hingewiesen, dass im Beispielsfall das Rahmenelement 71 mit der Ablenkeinrichtung 69 oberhalb einer Gehäusezwischenwand 74 angeordnet und verfahrbar ist. Die Gehäusezwischenwand 74 ist nur ausbruchsweise angedeutet und weist ein Kopplungsfenster 75 auf, durch die hindurch die Laserstrahlung 77 in den von der Zwischenwand 74 nach oben abgeschlossenen Prozessraum 5 gelangt.

Insbesondere falls in den einzelnen Prozessraumabteilen 8 mit unterschiedlichen Pulvermaterialien gearbeitet wird, kann es nützlich sein, wenn die Strahlungsintensität der Laserstrahlung pro Abteil individuell einstellbar ist, um unterschiedlichen Materialeigenschaften der Pulver gerecht zu werden.

In entsprechender Weise kann es im Rahmen der Erfindung auch vorgesehen sein, dass die Bestrahlungswellenlänge variierbar ist und z. B. ein spektral durchstimmbarer Laser oder ggf. mehrere Laser unterschiedlicher Emissionswellenlängen für die Bestrahlung der Pulverschichten in den verschiedenen Prozessraumabteilen 8 verwendet werden.

Das Ausführungsbeispiel nach den Fig. 1-3 zeichnet sich durch einen einfachen und vergleichsweise preiswerten Aufbau aus und erlaubt das Herstellen mehrerer Formkörper. Die Formkörper können gleiche oder ungleiche Formen haben. Überdies können die Formkörper aus gleichen oder aus ungleichen Materialien gefertigt werden. Es wird somit mit einfachen apparativen Mitteln eine große Flexibilität erreicht. Insbesondere erlaubt die Erfindung die ökologische und ökonomische Handhabung und Verarbeitung von Pulvern, die nicht mit Luft in Verbindung kommen sollten, also etwa die Verarbeitung von Titanpulver oder Aluminium.

Die Herstellung von Formkörpern kann mit dem Ausführungsbeispiel nach den Fig. 1-3 z. B. so erfolgen, dass zunächst die Träger 17 bis auf das Maß der Soll-Schichtdicke der ersten zu bestrahlenden Schicht an die obere Oberfläche der Bodenplatte 12 mittels der Elevatoreinrichtung 19, 21, 23 vertikal herangeführt wird, wonach dann die Pulverschicht-Präparierungseinrichtung in Betrieb gesetzt wird, so dass der Halter 29 mit den Pulverreservoirs 35 und den daran befindlichen Pulverabstreifelementen 37 über die Bauzylinderöffnungen 13 hinweg bewegt wird. Dabei gelangt Pulver aus den unteren Austrittsöffnungen 39 der Pulverreservoirs 35 auf die Träger 17, wobei das Pulver von dem betreffenden Pulverabstreifelement 37 glatt gestrichen und auf der Ebene der Oberseite der Bodenplatte 12 novelliert wird.

Nach einem solchen Pulverschicht-Präparierungsvorgang kann dann die Bestrahlung der Pulverschichten mit der Bestrahlungseinrichtung 67, 69 erfolgen. Dabei wird der optische Rahmen 71 nacheinander über die betreffenden Prozessraumabteile 8 positioniert, um einen jeweiligen Bestrahlungsvorgang nach Maßgabe von CAD-Daten oder ggf. davon abgeleiteten Daten des Formkörpers in der jeweiligen Pulverschicht durchzuführen. Es entsteht somit durch Umschmelzen oder ggf. Versintern des Werkstoffpulvers die erste Schicht des jeweiligen Formkörpers. Danach können die Träger 17 um das Maß einer weiteren Schichtdicke in den Bauzylindern 15 abgesenkt werden, so dass durch eine nachfolgende Fahrt der Pulverabgabevorrichtung 29, 35 über die Bauzylinder 15 hinweg eine neue Pulverschicht präpariert werden kann, die sodann in einem Bestrahlungsvorgang selektiv umgeschmolzen bzw. versintert wird, so dass eine zweite Schicht des Formkörpers entsteht. Die Vorgänge der Schichtenpräparation des Bestrahlens können dann wechselweise durchgeführt werden, bis die Formkörper fertig gestellt sind. Der Steuerungscomputer ist in den Zeichnungen nicht dargestellt.

Die nachstehenden Erläuterungen betreffen insbesondere die erfindungsgemäße Pulverrückgewinnung aus dem Prozessraum, vorzugsweise ohne dass das Pulver mit der Außenluft in Kontakt kommt.

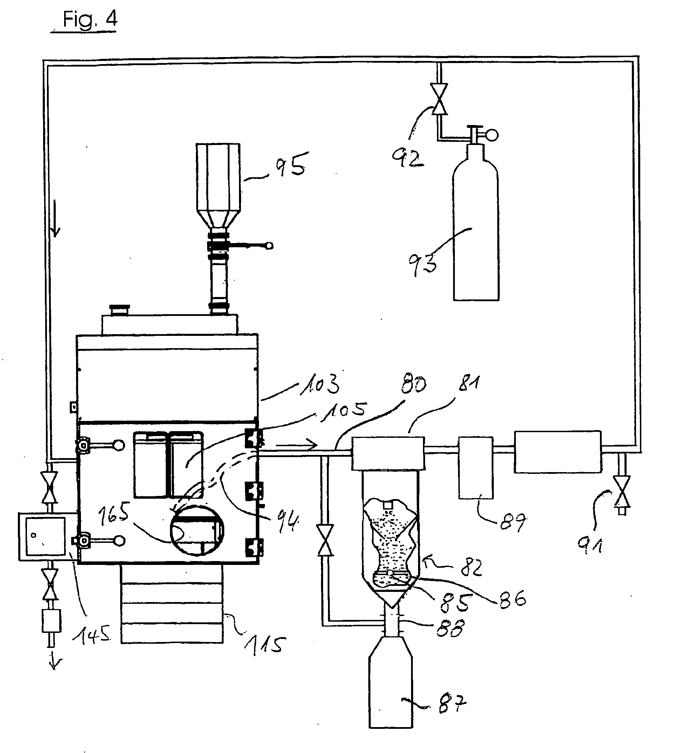

In Fig. 4 ist ein Prozessraumgehäuse 103 einer Vorrichtung zur Herstellung von Formkörpern durch schichtweises Aufbauen aus pulverförmigem Werkstoff dargestellt, welche einen einzelnen Prozessraum 105 mit einem Bauzylinder 115 zum Absenken eines Trägers umfasst, wenngleich in Varianten der Erfindung auch mehrere Prozessraumabteile in dem Gehäuse 103 vorhanden sein können, wie dies in dem ersten Ausführungsbeispiel der Fall ist. Wie das erste Ausführungsbeispiel weist auch das Ausführungsbeispiel nach Fig. 4 eine Schleusenkammer 145 auf, welche zum Prozessraum 105 hin und nach außen hin wahlweise geöffnet und geschlossen werden kann.

Bei dem Ausführungsbeispiel nach Fig. 4 ist in einem Schutzgasableitungszweig 80 eine Pulverfalle in Gestalt eines Filters 81 vorgesehen, welcher aus dem Prozessraum 105 abgesaugtes Pulver aus dem im Wesentlichen geschlossenen Schutzgas-Kreislauf, z. B. Argon-Kreislauf, zu einer Pulverrückgewinnungseinrichtung 82 mit einem ggf. zur automatischen Reinigung um die Achse 85 bedarfsweise drehbaren Sieb 86 abscheidet. Das von dem Sieb 86 gesiebte Pulver wird dann unter Luftausschluss in den Auffangbehälter 87 rieseln. Bei 88 sind z. B. Schleusenmittel vorgesehen, welche einen Wechsel des Behälters 87 ermöglichen, ohne dass Luft in den Behälter bzw. in die Pulverrückgewinnungseinrichtung 82 einströmt.

Mit 89 ist ein zweiter Filter bezeichnet, der dem Pulverfallenfilter 81 im Schutzgaskreislauf nachgeschaltet ist und dafür sorgen soll, dass der Pumpe 90 keine Pulverreste, die ggf. den Pulverfallenfilter 81 passiert haben, erreichen. Die Pumpe 90 dient als Umwälzpumpe für den Schutzgaskreislauf. Bei 91 ist ein Entlüftungsventil dargestellt. Über das Ventil 92 kann Schutzgas aus dem Vorratsbehälter 93 in den Schutzgaskreislauf eingespeist werden.

Mit 94 ist ein an der Leitung 80 angeschlossener und sich in den Prozessraum erstreckender Saugrüssel gekennzeichnet, welcher vorzugsweise flexibel und von außen handhabbar ist, insbesondere mittels eines durch die Handschuheingriffsöffnung 165 in den Prozessraum 105 einzustülpenden Handschuhs, welcher die Öffnung 165 nach außen hin gasdicht abschließt. Die Bedienungsperson kann die Öffnung des Saugrüssels 94 nahe an abzusaugendes Pulver in dem Prozessraum 105 heranführen und so den Prozessraum 105 weitgehend von Pulver befreien. In alternativen Varianten kann es vorgesehen sein, dass ein ggf. starrer Saugstutzen permanent in Absaugstellung positioniert ist, wobei er jedoch über ein Sperrventil mit der Rücklaufleitung 80 verbunden ist. Während des normalen Bauprozesses ist dieses Sperrventil dann geschlossen zu halten, wobei eine gesonderte Schutzgasableitung zwischen dem Prozessraum 105 und der Rücklaufleitung 80 vorzusehen wäre.

Bei dem handhabbaren flexiblen Saugrüssel 94 liegt demgegenüber der Vorteil vor, dass er während des normalen Bauprozesses einfach aus der unmittelbaren Nähe des Pulvers entfernt bleibt und nur bei Bedarf zum Pulverabsaugen geführt wird. Während des Bauprozesses dient er als Leitungselement für Schutzgas in dem Schutzgaskreislauf und zur Absaugung von evtl. auftretendem Prozessrauch.

Der Vollständigkeit halber sei noch darauf hingewiesen, dass mit 95 in Fig. 4 ein externer Pulverbehälter vorgesehen ist, aus dem ein betreffendes Pulverreservoir im Inneren der Prozesskammer 105 gespeist werden kann. Dabei wird Pulver aus dem externen Pulverbehälter über eine Schleuse, die mit Argon gespült wird, in den Haupttank gefüllt. Dadurch wird gewährleistet, dass kein Sauerstoff in den Haupttank gelangen kann.

Nicht erkennbar in Fig. 4 sind eine Bestrahlungseinrichtung, die sich in dem Gehäuse 103 befindet, und der Steuerrechner.

Eine zeichnerisch nicht dargestellte Ausführungsvariante der Erfindung mit Pulverrückgewinnung umfasst zusätzlich zu einem Prozessrauchabsaug- und Filtersystemein eigenes Pulverabsaugsystem, welches Pulver aus dem Prozessraum absaugt und einer Siebmaschine zuführt. Die Siebmaschine umfasst ein Pulversieb, auf welches das angesaugte Pulver auftrifft. Eine mit Borsten bzw. Zinken von oben her an dem Sieb abgestützte Bürsten- bzw. Rechenanordnung bewegt sich relativ zu dem Sieb, um das Durchsieben von Pulver zu beschleunigen. Grobkörnige Pulverteile bleiben im Sieb zurück und können gelegentlich bei Reinigungsarbeiten entfernt werden. Das Sieben findet in Schutzgasatmosphäre statt. Ebenfalls das Auffangen des durchgesiebten Pulvermaterials in einem Behälter. Ggf. kann das durchgesiebte Material auch mittels einer Pumpeinrichtung abgepumpt und der weiteren Bearbeitung bzw. Verpackung zugeführt werden.

Vorzugsweise ist auch die Siebmaschine mit einer Handschuhöffnung von außen zugänglich, ohne die Schutzgasatmosphäre aufheben zu müssen. Auf diese Weise kann z.B. das Sieb gereinigt werden. Die Relativbewegung zwischen Sieb und daran abgestützten Bürstenborsten bzw. Rechenzinken kann durch Bewegen des Siebs oder/und durch Bewegen der Bürsten bzw. Rechen mittels geeigneter Antriebe erzeugt werden.

Die Pulverrückgewinnungseinrichtungen nach der Erfindung, und so auch die vorstehend angesprochene Siebmaschine können dazu eingerichtet sein, dass Pulverauffangbehälter mit rückgewonnenem Pulver in Schutzgasatmosphäre wieder verschließbar sind. Zum Wechseln der Pulverauffangbehälter bietet sich wiederum eine mittels Schutzgas spülbare Schleuse an, wie sie oben bereits für den Prozessraum erläutert wurde.

Im Rahmen der Erfindung sind diverse Varianten der vorstehend erläuterten Ausführungsformen denkbar. So kann es vorgesehen sein, dass bei einer Ausführungsform mit mehreren Prozessraumabteilen jedem einzelnen Prozessraumabteil oder einer Gruppe von Prozessraumabteilen Pulverschichtpräparierungsmittel vorgesehen sind, die separat von den jeweils anderen Pulverschichtpräparierungsmitteln der Pulverschichtpräparierungseinrichtung steuerbar sind. Bei einer solchen Ausführungsform der Erfindung ist es möglich, in einem Prozessraumabteil die Pulverschichtpräparation durchzuführen, während in einem anderen Prozessraumabteil gleichzeitig der Bestrahlungsvorgang einer Schicht erfolgt.

Es können ferner Heizmittel vorgesehen sein, welche das durch Bestrahlen umzuschmelzende Pulver erhitzen. Bei diesen Heizmitteln kann es sich um elektrische Widerstandsheizungen oder/und um Strahlungsheizungen handeln.

## Patentansprüche

1. Vorrichtung zur Herstellung von Formkörpern durch schichtweises Aufbauen aus pulverförmigem, insbesondere metallischem oder keramischem Werkstoff, mit einem Prozessraumgehäuse, einer Schutzgaszuleitungs- und -ableitungseinrichtung zur Erzeugung und Aufrechterhaltung einer Schutzgasatmosphäre, insbesondere Argonatmosphäre im Prozessraum, einem Träger für den Schichtaufbau, einer Bestrahlungseinrichtung zur Bestrahlung der jeweils auf dem Träger präparierten Werkstoffpulverschicht in einem dieser Schicht zugeordneten Querschnittsbereich des Modells des Formkörpers mit einer Strahlung, insbesondere fokussierten Laserstrahlung, die das Werkstoffpulver in diesem Querschnittsbereich durch Erhitzen zum Verschmelzen oder ggf. zum Versintern bringt, und einer Pulverschichtpräparierungseinrichtung zur Präparierung der jeweils folgenden Werkstoffpulverschicht auf der zuletzt bestrahlten oder aufgetragenen Schicht,
wobei die Vorrichtung
eine Pulverrückgewinnungseinrichtung zur Rückgewinnung von nicht verbrauchtem Werkstoffpulver aus dem Prozessraum (105) aufweist, wobei die Pulverrückgewinnungseinrichtung eine Pulverausbringeinrichtung (81, 82) zum Ausbringen von Pulver aus dem Prozessraum (105) und eine Pulversammeleinrichtung (87, 88) zum Sammeln des aus dem Prozessraum (105) ausgebrachten Pulvers aufweist, wobei die Pulverrückgewinnungseinrichtung so gestaltet und an den Prozessraum (105) angeschlossen ist, dass die Pulverrückgewinnung in einem nach außen abgeschlossenen Bereich, insbesondere vollständig in Schutzgasatmosphäre, durchführbar ist, **dadurch gekennzeichnet dass** die Schutzgaszuleitungs- und -ableitungseinrichtung einen an einem Schutzgasabsauganschluss einer Pumpe (90) angeschlossenen und in den Prozessraum (105) hineinragenden Saugrüssel (94) zum Absaugen von Schutzgas aus dem Prozessraum (105) umfasst, wobei der Saugrüssel (94) bedarfsweise als Element der Pulverausbringeinrichtung zum Absaugen von Pulver aus dem Prozessraum (105) nutzbar ist, indem die Saugöffnung des Saugrüssels zu verschiedenen Stellen innerhalb des Prozessraums führbar ist.

2. Vorrichtung nach Anspruch 1,
**dadurch gekennzeichnet,**
**dass** die Saugöffnung des Saugrüssels (94) zu verschiedenen Stellen innerhalb des Prozessraumes führbar ist.

3. Vorrichtung nach einem der Ansprüche 1 bis 2,
**dadurch gekennzeichnet,**
**dass** die Pulverrückgewinnungseinrichtung wenigstens eine der Pulversammeleinrichtung vorgeschaltete Filtereinrichtung aufweist.

4. Vorrichtung nach Anspruch 3,
**dadurch gekennzeichnet,**
**dass** die Filtereinrichtung wenigstens ein Pulversieb umfasst.

5. Vorrichtung nach einem der vorhergehenden Ansprüche,
**dadurch gekennzeichnet,**
**dass** in dem Prozessraumgehäuse (5) mehrere, gesondert voneinander angeordnete Träger (17) für den Schichtaufbau mehrerer Formkörper vorgesehen sind und dass die Pulverschichtpräparierungseinrichtung den einzelnen Trägern (17) zugeordnete Pulverreservoirs (35) zur Bereitstellung von Pulver für den jeweiligen Bauprozess umfasst.

6. Vorrichtung nach Anspruch 5,
**dadurch gekennzeichnet,**
**dass** in dem Prozessraum (5) wenigstens eine Trennwand (9) zur seitlichen Abgrenzung der Träger (17) voneinander vorgesehen ist.

7. Vorrichtung nach Anspruch 5 oder 6,
**dadurch gekennzeichnet,**
**dass** die Pulverschichtpräparierungseinrichtung eine die Pulverreservoirs (35) umfassende Pulverabgabevorrichtung aufweist, die einen über die Träger (17) hinweg mittels einer Antriebseinrichtung (25) geführt hin- und herbewegbaren und die Pulverreservoirs (35) mitführenden Halter umfasst.

8. Vorrichtung nach Anspruch 7,
**dadurch gekennzeichnet,**
**dass** die Schichtenglättungseinrichtung Pulverabstreifelemente (37) in Zuordnung zu den einzelnen Trägern (17) umfasst, wobei die Pulverabstreifelemente zusammen mit der Pulverabgabevorrichtung an einem von der Antriebseinrichtung angetriebenen gemeinsamen Halter (29) bewegbar sind.

9. Vorrichtung nach Anspruch 8,
**dadurch gekennzeichnet,**
**dass** die Pulverreservoirs (35) Wechselbehälter sind und dass die Wechselbehälter in Einsatzöffnungen (33) des bewegbaren Halters (29) auswechselbar aufgenommen sind.

10. Vorrichtung nach einem der vorhergehenden Ansprüche 5 bis 9,
**dadurch gekennzeichnet,**
**dass** für mehrere, insbesondere alle Träger (17) eine gemeinsame Bestrahlungseinrichtung (67, 69, 71) vorgesehen ist, wobei die Bestrahlungseinrichtung (67, 69, 71) eine über die Träger (17) hinweg verfahrbare und in jeweilige Betriebspositionen zur gesteuerten Pulverschichtenbestrahlung einstellbare Strahlablenkeinrichtung (69), insbesondere X-Y-Scannereinrichtung aufweist.

11. Vorrichtung nach einem der Ansprüche 5 bis 10,
**dadurch gekennzeichnet,**
**dass** jedem Träger eine eigene Bestrahlungseinrichtung zur gesteuerten Pulverschichtenbestrahlung zugeordnet ist.

## Claims

1. An apparatus for producing moulded bodies by layered build-up from powdered, in particular metallic or ceramic material, with a process chamber housing, an inert gas inlet and outlet device for creating and maintaining an inert-gas atmosphere, in particular an argon atmosphere, in the process chamber, a support for the layered build-up, with an irradiation device for irradiating the material powder layer respectively prepared on the support in a cross-sectional region of the pattern of the moulded body assigned to this layer with radiation, in particular focused laser radiation, which causes the material powder in this cross-sectional region to be melted or optionally to be sintered by heating, and with powder layer preparation device for preparing each subsequent material powder layer on the last irradiated or applied layer,
wherein the apparatus has a powder recovery device for recovering unused material powder from the process chamber (105), wherein the powder recovery device has a powder discharging device (81,82) for the discharge of powder from the process chamber (105) and a powder collecting device (87,88) for collecting powder discharged from the process chamber (105), wherein the powder recovery device is so configured and connected to the process chamber (105) that the powder recovery can be carried out in a zone closed off from the exterior, in particular entirely in an inert-gas atmosphere, **characterised in that** the inert-gas inlet and outlet device comprises a suction nozzle (94), which is connected to an inert-gas suction connector of a pump (90) and which projects into the process chamber (105), for sucking inert gas from the process chamber (105), wherein the suction nozzle (94) as an element of the powder discharge device can, if necessary, be used to suck powder from the process chamber (105) **in that** the suction opening of the suction nozzle can be directed to different locations inside the process chamber.

2. An apparatus according to Claim 1,
**characterised in that** the suction opening of the suction nozzle (94) can be directed to different locations inside the process chamber

3. An apparatus according to either of Claims 1 and 2,
**characterised in that** the powder recovery device has at least one filter device connected upstream of the powder collecting device.

4. An apparatus according to Claim 3,
**characterised in that** the filter device comprises at least one powder screen.

5. An apparatus according to any one of the preceding Claims,
**characterised in that** a plurality of supports (17) arranged separate from one another are provided in the process chamber housing (5) for the layered build-up of a plurality of moulded bodies, and **in that** the powder layer preparation device comprises powder reservoirs (35) assigned to the individual supports (17) for making available powder for the respective building process.

6. An apparatus according to Claim 5,
**characterised in that** at least one separating wall (9) is provided in the process chamber (5) for lateral delimitation of the supports (17) from one another.

7. An apparatus according to Claim 5 or 6,
**characterised in that** the powder layer preparation device has a powder output device comprising the powder reservoirs (35), which comprises a holder which is guided to move in a reciprocating movement over the support (17) by means of a drive device (25) and which entrains the powder reservoirs (35).

8. An apparatus according to Claim 7,
**characterised in that** the layer-smoothing device comprises powder-scraping elements (37) in association with the individual supports (17), wherein the powder-scraping elements, together with the powder output device, can move on a holder (29) jointly driven by the drive device.

9. An apparatus according to Claim 8,
**characterised in that** the powder reservoirs (35) are exchangeable containers, and **in that** the exchangeable containers are accommodated replaceably in insert openings (33) of the mobile holder (29).

10. An apparatus according to any one of the preceding Claims 5 to 9,
**characterised in that** a common irradiation device (67,69,71) is provided for a plurality, in particular all of the supports (17), wherein the irradiation device (67,69,71) has a radiation-deflecting device (69), in particular an X-Y scanner device, which can travel over the support (17) and can be adjusted in respective operating positions for controlled powder layer irradiation.

11. An apparatus according to any one of Claims 5 to 10, **characterised in that** a separate irradiation device for controlled powder layer irradiation is assigned to each support.

## Revendications

1. Dispositif de fabrication de corps moulés par constitution en couches de matériau pulvérulent, en particulier métallique ou céramique, avec un boîtier de chambre de processus, un dispositif d'amenée et d'évacuation de gaz inerte pour la génération et le maintien d'une atmosphère inerte, en particulier une atmosphère d'argon dans la chambre de processus, un support pour la structure en couches, un dispositif d'irradiation pour l'irradiation de la couche de poudre de matériau préparée respectivement sur le support dans une zone de section transversale, associée à cette couche, du modèle du corps moulé avec un rayonnement, en particulier un rayonnement laser focalisé qui amène la poudre de matériau dans cette zone de section transversale par réchauffement à fondre ou éventuellement à fritter, et un dispositif de préparation de couche de poudre pour la préparation de la couche de poudre de matériau suivante respectivement sur la couche appliquée ou irradiée en dernier, le dispositif présentant un dispositif de récupération de poudre pour la récupération de la poudre de matériau non utilisée de la chambre de processus (105), le dispositif de récupération de poudre présentant un dispositif d'enlèvement de poudre (81, 82) pour l'enlèvement de poudre de la chambre de processus (105) et un dispositif collecteur de poudre (87, 88) pour la collecte de la poudre enlevée de la chambre de processus (105), le dispositif de récupération de poudre étant conçu et raccordé à la chambre de processus (105) de sorte que la récupération de poudre puisse être réalisée dans une zone fermée vers l'extérieur, en particulier entièrement dans l'atmosphère inerte, **caractérisé en ce que** le dispositif d'amenée et d'évacuation de gaz inerte comporte une trompe d'aspiration (94) raccordée à un raccord d'aspiration de gaz inerte d'une pompe (90) et pénétrant dans la chambre de processus (105) pour l'aspiration de gaz inerte de la chambre de processus (105), la trompe d'aspiration (94) pouvant être utilisée, si besoin, comme élément du dispositif d'enlèvement de poudre pour l'aspiration de poudre de la chambre de processus (105) tandis que l'ouverture d'aspiration de la trompe d'aspiration peut être guidée vers différents endroits dans la chambre de processus.

2. Dispositif selon la revendication 1, **caractérisé en ce que** l'ouverture d'aspiration de la trompe d'aspiration (94) peut être guidée vers différents endroits dans la chambre de processus.

3. Dispositif selon l'une quelconque des revendications 1 à 2, **caractérisé en ce que** le dispositif de récupération de poudre présente au moins un dispositif de filtration monté en amont du dispositif collecteur de poudre.

4. Dispositif selon la revendication 3, **caractérisé en ce que** le dispositif de filtration comporte au moins un tamis pour poudre.

5. Dispositif selon l'une quelconque des revendications précédentes, **caractérisé en ce que** plusieurs supports (17) disposés à part les uns des autres sont prévus dans le boîtier de chambre de processus (5) pour la structure en couches de plusieurs corps moulés et **en ce que** le dispositif de préparation de couche de poudre comporte des réservoirs de poudre (35) associés aux supports individuels (17) pour la mise à disposition de poudre pour le processus de construction respectif.

6. Dispositif selon la revendication 5, **caractérisé en ce qu'**au moins une paroi de séparation (9) est prévue dans la chambre de processus (5) pour la délimitation latérale des supports (17) les uns par rapport aux autres.

7. Dispositif selon la revendication 5 ou 6, **caractérisé en ce que** le dispositif de préparation de couche de poudre présente un dispositif de distribution de poudre comportant les réservoirs de poudre (35) qui comporte un appui pouvant être déplacé alternativement par guidage au-delà des supports (17) au moyen d'un dispositif d'entraînement (25) et entraînant les réservoirs de poudre (35).

8. Dispositif selon la revendication 7, **caractérisé en ce que** le dispositif de lissage de couche comporte des éléments de raclage de poudre (37) en association avec les supports individuels (17), les éléments de raclage de poudre pouvant être déplacés conjointement avec le dispositif de distribution de poudre sur un appui (29) commun, entraîné par le dispositif d'entraînement.

9. Dispositif selon la revendication 8, **caractérisé en ce que** les réservoirs de poudre (35) sont des récipients interchangeables et **en ce que** les récipients interchangeables sont reçus de manière détachable dans des ouvertures d'insertion (23) de l'appui (29) mobile.

10. Dispositif selon l'une quelconque des revendications 5 à 9, **caractérisé en ce que** pour plusieurs, en particulier tous les supports (17), un dispositif d'irradiation (67, 69, 71) commun est prévu, le dispositif d'irradiation (67, 69, 71) présentant un dispositif de déflexion de faisceau (69) réglable dans des positions de fonctionnement respectives pour l'irradiation de couche de poudre et pouvant être déplacé au-delà des supports (17), en particulier un dispositif scanneur X, Y.

11. Dispositif selon l'une quelconque des revendications 5 à 10, **caractérisé en ce qu'**un propre dispositif d'irradiation est associé à chaque support pour l'irradiation de couche de poudre commandée.
